# EUROPEAN PATENT APPLICATION

(11) **EP 4 343 699 A1**
(43) Date of publication of application: **27.03.2024**
(21) Application number: 23765777.0
(22) Date of filing: 21.02.2023
(51) Int. Cl.: G06T 7/70, G06T 7/20, A63F 13/55, A63F 13/56

(54) **METHOD AND APPARATUS FOR CONTROLLING VIRTUAL OBJECT, AND COMPUTER DEVICE AND STORAGE MEDIUM**

(30) Priority: 07.03.2022 CN 202210224563
(71) Applicant: Beijing Zitiao Network Technology Co., Ltd., Beijing 100190 (CN)
(72) Inventor: DONG, Zhaozhe, Beijing 100086 (CN); MENG, Zhishen, Beijing 100086 (CN)
(74) Representative: Dentons UK and Middle East LLP
(86) International application number: PCT/CN2023/077275
(87) International publication number: WO 2023/169199

(57) **Abstract**

Provided in the present disclosure are a method and apparatus for controlling a virtual object, and a computer device and a storage medium. The method comprises: in response to a first virtual object being in a target motion state, determining pose information of the first virtual object; on the basis of the pose information, determining position information of a following anchor point, wherein the following anchor point is used for representing a motion end-point, under the pose information, of a second virtual object associated with the first virtual object; and on the basis of the position information of the following anchor point, controlling the second virtual object to move.

## Description

### CROSS-REFERENCE TO RELATED APPLICATION

The present application claims the priority to Chinese Patent Application No. 202210224563.3, filed on March 7, 2022, the entire disclosure of which is incorporated herein by reference as portion of the present application.

### TECHNICAL FIELD

The present disclosure relates to the technical field of controlling a virtual object, and specifically, to a method of controlling a virtual object, an apparatus, a computer device, and a storage medium.

### BACKGROUND

To improve the user's game experience and user stickiness, many games have developed pet systems. In addition to being fed and watched, pets can also follow players to explore the world and fight.

In related technologies, pets often follow the location of the game player. The pet will move with the player's location as the end, and finally stop around the player. Because the pet only follows the location of the game player, the pet has fewer display opportunities when following the player in some game perspectives, resulting in poor user experience.

### SUMMARY

The embodiments of the present disclosure provide at least a method of controlling a virtual object, an apparatus, a computer device, and a storage medium.

In a first aspect, the embodiments of the present disclosure provide a method of controlling a virtual object, comprising:
determining pose information of a first virtual object in response to the first virtual object being in a target motion state;
determining location information of a following anchor point based on the pose information, in which the following anchor point is used to represent a motion end of a second virtual object associated with the first virtual object under the pose information;
and controlling the second virtual object to move based on the location information of the following anchor point.

In an optional example, determining pose information of a first virtual object comprises:
determining the pose information of the first virtual object in a game map.

In an optional example, determining location information of a following anchor point based on the pose information comprises:
determining a following distance corresponding to the first virtual object and/or the second virtual object;
determining a following angle based on the pose information;
and determining the location information of the following anchor point based on location information in the pose information, the following distance, and the following angle.

In an optional example, determining a following distance corresponding to the first virtual object and/or the second virtual object comprises:
determining a following distance corresponding to a type of the first virtual object and/or a type of the second virtual object;
or determining a following distance corresponding to a type of the first virtual object and/or a type of the second virtual object, and a game scene where the first virtual object is located.

In an optional example, determining location information of a following anchor point based on the pose information comprises:
determining first motion information corresponding to the first virtual object;
and determining the location information of the following anchor point based on the first motion information and the pose information.

In an optional example, before controlling the second virtual object to move, the method further comprises:
determining a target duration of the first virtual object being in the target motion state;
and controlling the second virtual object to move based on the location information of the following anchor point comprises:
   controlling the second virtual object to move based on the location information of the following anchor point when the target duration is detected to satisfy a preset condition.

In an optional example, controlling the second virtual object to move based on the location information of the following anchor point comprises:
determining first motion information corresponding to the first virtual object;
and determining second motion information corresponding to the second virtual object based on the location information of the following anchor point and the first motion information, and controlling the second virtual object to move based on the second motion information.

In an optional example, the method further comprises:
determining location change information of the following anchor point;
and updating the second motion information based on the location change information, and controlling the second virtual object to move based on updated second motion information.

In an optional example, the method further comprises:
displaying a preset media resource corresponding to the second virtual object, in a case where the second virtual object is detected being in a target region corresponding to the first virtual object.

In an optional example, the method further comprises:
determining a combat target corresponding to the second virtual object in response to the first virtual object being in the target combat state;
and controlling the second virtual object to perform a target combat action on the combat target based on location information corresponding to the combat target.

In a second aspect, the embodiments of the present disclosure further provide an apparatus of controlling a virtual object, comprising:
a first determination module, which is configured to determine pose information of a first virtual object in response to the first virtual object being in a target motion state;
a second determination module, which is configured to determine location information of a following anchor point based on the pose information, wherein the following anchor point is used to represent a motion end of a second virtual object associated with the first virtual object under the pose information;
and a control module, which is configured to control the second virtual object to move based on the location information of the following anchor point.

In an optional example, the first determination module, when determining pose information of a first virtual object, is configured to determine the pose information of the first virtual object in a game map.

In an optional example, the second determination module, when determining location information of a following anchor point based on the pose information, is configured to: determine a following distance corresponding to the first virtual object and/or the second virtual object;
determine a following angle based on the pose information;
and determine the location information of the following anchor point based on location information in the pose information, the following distance, and the following angle.

In an optional example, the second determination module, when determining a following distance corresponding to the first virtual object and/or the second virtual object, is configured to: determine a following distance corresponding to a type of the first virtual object and/or a type of the second virtual object;
or determining a following distance corresponding to a type of the first virtual object and/or a type of the second virtual object, and a game scene where the first virtual object is located.

In an optional example, the second determination module, when determining location information of a following anchor point based on the pose information, is configured to: determine first motion information corresponding to the first virtual object;
and determine the location information of the following anchor point based on the first motion information and the pose information.

In an optional example, before controlling the second virtual object to move, the first determination module is further configured to determine a target duration of the first virtual object being in the target motion state;
and the control module, when controlling the second virtual object to move based on the location information of the following anchor point, is configured to controlling the second virtual object to move based on the location information of the following anchor point when the target duration is detected to satisfy a preset condition.

In an optional example, the control module, when controlling the second virtual object to move based on the location information of the following anchor point, is configured to: determine first motion information corresponding to the first virtual object;
determine second motion information corresponding to the second virtual object based on the location information of the following anchor point and the first motion information, and control the second virtual object to move based on the second motion information.

In an optional example, the control module is configured to:
determine location change information of the following anchor point;
update the second motion information based on the location change information, and control the second virtual object to move based on updated second motion information.

In an optional example, the control module is configured to:
displaying a preset media resource corresponding to the second virtual object, in a case where the second virtual object is detected being in a target region corresponding to the first virtual object.

In an optional example, the control module is configured to:
determine a combat target corresponding to the second virtual object in response to the first virtual object being in the target combat state;
and control the second virtual object to perform a target combat action on the combat target based on location information corresponding to the combat target.

In a third aspect, the embodiments of the present disclosure further provide a computer device, comprising a processor, a memory, and a bus; the memory stores machine-readable instructions executable by the processor, when the computer device is running, the processor and the memory communicate through the bus, and the machine-readable instructions, when executed by the processor, execute the steps in the above-mentioned first aspect or any optional example of the first aspect.

In a fourth aspect, the embodiments of the present disclosure further provide a computer-readable storage medium, a computer program is stored in the computer-readable storage medium, and the computer program, when executed by a processor, executes the steps in the above-mentioned first aspect or any optional example of the first aspect.

The method of controlling a virtual object, the apparatus, the computer device, and the storage medium provided by the embodiments of the present disclosure can determine the location information of the following anchor point of the second virtual object associated with the first virtual object based on the pose information of the first virtual object, and control the second virtual object to move based on the location information of the following anchor point. In this way, because the second virtual object does not directly follow the first virtual object to move, there are more display opportunities from the perspective of the first virtual object; on the other hand, using the pose information of the first virtual object to determine the location information of the following anchor point can increase the display opportunities for the second virtual object to appear in the perspective of the first virtual object, thereby improving user experience.

In order to make the above-mentioned objects, features and advantages of the present disclosure more obvious and understandable, preferred embodiments are given below and described in detail with reference to the drawings.

### BRIEF DESCRIPTION OF DRAWINGS

To more clearly illustrate the technical solutions in the embodiments of the present disclosure, the drawings to be used in the embodiments will be briefly described below, the drawings here are incorporated into the specification and constitute a part of this specification, and these drawings illustrate the embodiments consistent with the present disclosure and, together with the description, serve to explain the technical solutions of the present disclosure. It should be understood that the following drawings only illustrate certain embodiments of the present disclosure, and therefore should not be regarded as limit to the scope. For those ordinarily skilled in the art that other drawings can be obtained on the basis of these drawings without inventive work.
FIG. 1 shows a flowchart of a method of controlling a virtual object provided by the embodiments of the present disclosure;
FIG. 2a shows a schematic diagram of a following angle in a method of controlling a virtual object provided by the embodiments of the present disclosure;
FIG. 2b shows a schematic diagram of determining a following angle in a method of controlling a virtual object provided by the embodiments of the present disclosure;
FIG. 2c shows a schematic diagram of determining location information of a following anchor point in a method of controlling a virtual object provided by the embodiments of the present disclosure;
FIG. 2d shows a schematic diagram of a target region in a method of controlling a virtual object provided by the embodiments of the present disclosure;
FIG. 3 shows a schematic diagram of an architecture of an apparatus of controlling a virtual object provided by the embodiments of the present disclosure; and
FIG. 4 shows a schematic structural diagram of a computer device provided by the embodiments of the present disclosure.

### DETAILED DESCRIPTION

In order to make the purpose, technical solutions and advantages of the embodiments of the present disclosure clearer, the technical solutions in the embodiments of the present disclosure will be clearly and completely described below with reference to the drawings in the embodiments of the present disclosure. Obviously, the described embodiments are only some embodiments of the present disclosure, but not all embodiments. The components of the embodiments of the present disclosure generally described and illustrated in the drawings herein may be arranged and designed in a variety of different configurations. Therefore, the following detailed description of the embodiments of the present disclosure provided in the drawings is not intended to limit the scope of the claimed disclosure, but rather to represent selected embodiments of the present disclosure. Based on the embodiments of the present disclosure, all other embodiments obtained by those skilled in the art without any creative efforts shall fall within the scope of protection of the present disclosure.

It should be noted that similar reference numerals and letters represent similar items in the following drawings, therefore, once an item is defined in one drawing, it does not need further definition and explanation in subsequent drawings.

The term "and/or" herein only describes an association relationship, indicating that three relationships may exist. For example, A and/or B may mean three situations: A alone exists, A and B exist simultaneously, and B alone exists. In addition, the term "at least one" herein means any one of a plurality or any combination of at least two of a plurality, for example, including at least one of A, B, and C may mean including any one or more elements selected from a set composed of A, B and C.

Research has found that in related technologies, pets often follow the location of the game player. The pet will move with the player's location as the end, and finally stop around the player. Because the pet only follows the location of the game player, the pet has fewer display opportunities when following the player in some game perspectives, resulting in poor user experience.

Based on the above-mentioned research, the present disclosure provides a method of controlling a virtual object, an apparatus, a computer device, and a storage medium, which can determine location information of a following anchor point of a second virtual object associated with a first virtual object based on pose information of the first virtual object, and control the second virtual object to move based on the location information of the following anchor point. In this way, because the second virtual object does not directly follow the first virtual object to move, there are more display opportunities from the perspective of the first virtual object; on the other hand, using the pose information of the first virtual object to determine the location information of the following anchor point can increase the display opportunities for the second virtual object to appear in the perspective of the first virtual object, thereby improving user experience.

In order to facilitate understanding of the embodiments, a method of controlling a virtual object disclosed in the embodiments of the present disclosure is first introduced in detail. The execution subject of the method of controlling a virtual object provided by the embodiments of the present disclosure is generally a computer device with certain computing capabilities, and the computer device includes, for example, a terminal device or a server or other processing device. The terminal device may be user equipment (User Equipment, UE), a mobile device, a user terminal, a terminal, a personal digital assistant (PDA), a handheld device, a computing device, an in-vehicle device, a wearable device, etc. In some possible implementations, the method of controlling a virtual object may be implemented by a processor calling computer-readable instructions stored in a memory.

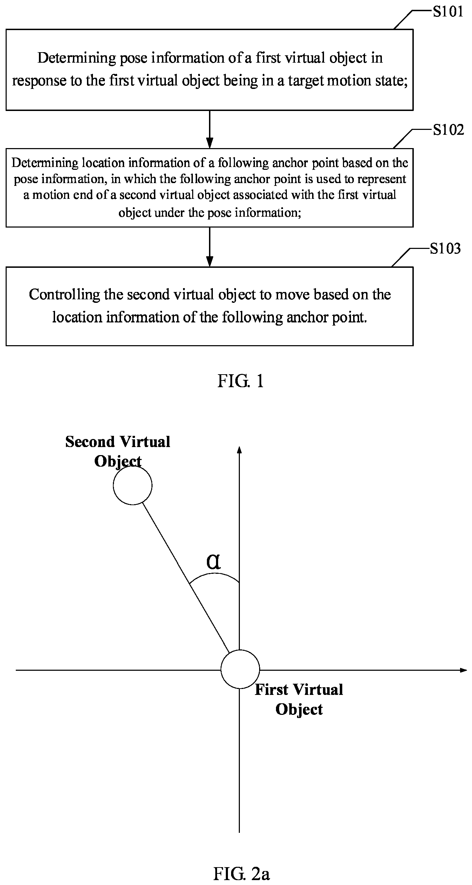

Referring to FIG. 1, a flowchart of a method of controlling a virtual object provided by the embodiments of the present disclosure is shown, and the method includes S101-S103.

S101: determining pose information of a first virtual object in response to the first virtual object being in a target motion state.

S102: determining location information of a following anchor point based on the pose information, in which the following anchor point is used to represent a motion end of a second virtual object associated with the first virtual object under the pose information.

S103: controlling the second virtual object to move based on the location information of the following anchor point.

Below is a detailed description of the above-mentioned steps.

For S101, the first virtual object may be a game obj ect in a target game that receives a player operation instruction, and a player can perform the target game by controlling the game object; the target motion state includes walking, running, cycling, and swimming, etc.; and the pose information includes location information and orientation information, and the location information may be, for example, the three-dimensional coordinates of the first virtual object in the world coordinate system.

In an optional example, when determining the pose information of the first virtual object, the pose information of the first virtual object in a game map may be determined.

Here, the game map may be a game map in the target game.

Exemplarily, when determining the pose information of the first virtual object, the three-dimensional coordinates of the first virtual object in the game map of the target game and the orientation information in the target game may be determined.

S102: determining location information of a following anchor point based on the pose information, in which the following anchor point is used to represent a motion end of a second virtual object associated with the first virtual object under the pose information.

Here, the second virtual object may be, for example, a pet of the first virtual object, such as a pet cat, a pet dog, etc.

In an optional example, the location information of the following anchor point may be determined through the following steps A1 to A3.

A1: determining a following distance corresponding to the first virtual object and/or the second virtual object.

Here, when determining the following distance, any of the following methods may be used:
Method 1: determining a following distance corresponding to a type of the first virtual object.

Here, the type of the first virtual object may be, for example, a character type of the game object.

Specifically, when determining the following distance, the following distance corresponding to the type of the first virtual object may be determined according to a preset mapping relationship between the character type and the following distance.

Exemplarily, taking the case where the character type of the first virtual object is a mage as an example, the following distance may be determined to be 5 meters according to a preset mapping relationship between the mage and the following distance.

Method 2: determining a following distance corresponding to a type of the second virtual object.

Here, the type of the second virtual object may be, for example, a pet type.

Specifically, when determining the following distance, the following distance corresponding to the type of the second virtual object may be determined according to a preset mapping relationship between the pet type and the following distance.

Exemplarily, taking the case where the pet type is a pet dog as an example, the following distance may be determined to be 3 meters according to a preset mapping relationship between the pet dog and the following distance.

Method 3: determining a following distance corresponding to the types of the first virtual object and the second virtual object.

Exemplarily, taking the case where the pet type is a pet dog and the character type of the first virtual obj ect is a mage as an example, the following distance may be determined to be 4 meters according to a preset mapping relationship between the pet dog, the mage, and the following distance.

Method 4: determining a following distance corresponding to the type of the first virtual object and a game scene where the first virtual object is located.

Here, the game scene may be, for example, a desert, a river, a jungle, etc.

Exemplarily, taking the case where the character type of the first virtual object is a mage and the game scene is a desert as an example, the following distance may be determined to be 2 meters corresponding to a preset mapping relationship between the mage, the desert, and the following distance.

Method 5: determining a following distance corresponding to the type of the second virtual object and the game scene.

Exemplarily, taking the case where the character type of the second virtual object is a pet dog and the game scene is a river as an example, the following distance may be determined to be 0.5 meters according to a preset mapping relationship between the pet dog, the river, and the following distance.

Method 6: determining a following distance corresponding to the type of the first virtual object, the type of the second virtual object and the game scene.

Exemplarily, taking the case where the character type of the first virtual object is a mage, the character type of the second virtual object is a pet dog, and the game scene is a desert as an example, the following distance may be determined to be 1 meter according to a preset mapping relationship between the mage, the pet dog, the desert and the following distance.

A2: determining a following angle based on the pose information.

Here, the following angle is used to characterize an angular relationship between the second virtual object and the first virtual object.

Exemplarily, a schematic diagram of the following angle may be shown in FIG. 2a. In FIG.2a, angle α, which is between a connection line between the second virtual object and the first virtual object, and an extension line of the current orientation of the first virtual object, is the following angle.

Specifically, when determining the following angle based on the pose information, the following angle corresponding to the current pose information of the first virtual object may be determined based on a preset mapping relationship between the pose information and the following angle.

In addition, the following angle may also be determined according to the viewing angle of the game player set in the target game.

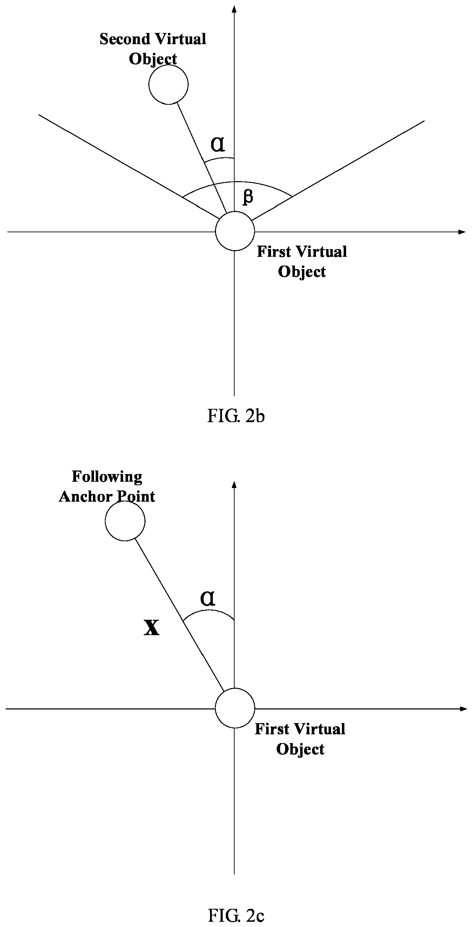

Exemplarily, a schematic diagram of determining the following angle may be shown in FIG. 2b. In FIG. 2b, the viewing angle of the game player in the target game is β, and the following angle α may be obtained by randomly selecting an angel from an angle range (0-β/2).

A3: determining the location information of the following anchor point based on location information in the pose information, the following distance, and the following angle.

Exemplarily, a schematic diagram of determining the location information of the following anchor point may be shown in FIG. 2c. In FIG. 2c, the following distance is x and the following angle is α. The location information of the following anchor point may be determined according to the location information of the first virtual object, the following distance, and the following angle.

In another possible implementation, the location information of the following anchor point may be determined through the following steps B1 to B2.

B 1: determining first motion information corresponding to the first virtual object.

Here, the first motion information may include a first motion speed of the first virtual object.

B2: determining the location information of the following anchor point based on the first motion information and the pose information.

Here, when determining the location information of the following anchor point based on the first motion information and the pose information, the following distance may be determined based on the first motion information; and the following angle may be determined based on the pose information; and the location information of the following anchor point may be determined based on the location information in the pose information, the following distance, and the following angle.

Specifically, when determining the following distance based on the first motion information, the following distance may be determined according to a preset mapping relationship between the first motion speed and the following distance; preferably, the following distance is proportional to the first motion speed.

Exemplarily, taking the case where the first motion speed is 5 m/s as an example, the following distance may be determined to be 2 m according to the preset mapping relationship between the first motion speed and the following distance.

S103: controlling the second virtual object to move based on the location information of the following anchor point.

In an optional example, the second virtual object may be controlled to move through the following steps C1-C2.

C1: determining a target duration of the first virtual object being in the target motion state.

Here, when determining the target duration, it may be to determine the duration that the first virtual object is in the same target motion state (such as the duration of running in the same forward direction). When the target motion state of the first virtual object changes, the target duration of the changed target motion state is redetermined.

Exemplarily, taking the case where the first virtual object runs in a due north direction for 1 second and then runs in a due south direction for 2 seconds as an example, the corresponding target durations are 1 second and 2 seconds respectively.

C2: controlling the second virtual object to move based on the location information of the following anchor point when the target duration is detected to satisfy a preset condition.

Here, the preset condition may be that the target duration is greater than the preset duration.

Exemplarily, taking the case where the target duration of the first virtual object being in the target motion state is 1s and the preset condition is that the target duration is greater than or equal to 0.5s as an example, then when the first virtual object is in the target motion state for 0.5s, the second virtual object can be controlled to move.

In an optional example, when controlling the second virtual object to move, the first motion information corresponding to the first virtual object may be determined; and the second motion information corresponding to the second virtual object is determined based on the location information of the following anchor point and the first motion information, and the second virtual object is controlled to move based on the second motion information.

Here, the second motion information may include a second motion speed of the second virtual object.

Specifically, when determining the second motion information corresponding to the second virtual object, the second motion speed is determined based on a first target distance (that is, the following distance) between the location information of the following anchor point and the location information of the first virtual object, and the first motion speed in the first motion information; or the second motion speed may also be determined based on a second target distance between the location information of the following anchor point and the location information of the second virtual object, and the first motion speed; or the second motion speed may also be determined based on the first target distance, the second target distance and the first motion speed; preferably, the second motion speed is greater than the first motion speed, and the second motion speed is proportional to the first motion speed, the first target distance, and the second target distance.

Exemplarily, taking the case where the first target distance is 5m and the first motion speed is 8m/s as an example, the second motion speed is determined to be 15m/s according to a preset mapping relationship between the first target distance, the first motion speed and the second motion speed.

Specifically, when controlling the second virtual object to move based on the second motion information, the location information of the following anchor point may be used as a motion end of the second virtual object, and the second motion speed may be used as an initial motion speed to control the second virtual object to move from the current location to the location of the following anchor point.

In an optional example, because the pose information of the first virtual object may change over time, the location information of the following anchor point will also change accordingly, and the subsequent second motion information of the second virtual object that follows the motion of the following anchor point needs to be adjusted accordingly, so the location change information of the following anchor point can be determined; and the second motion information is updated based on the location change information, and the second virtual object is controlled to move based on updated second motion information.

Here, the location change information is used to characterize the speed of the location change of the following anchor point, which may be represented by the distance between the current location of the following anchor point and the location of the previous second.

Specifically, when updating the second motion information based on the location change information, a speed increment that corresponds to the location change information may be determined based on the preset mapping relationship between the location change information and the speed increment, and the second motion speed in the second motion information is updated based on the speed increment. For example, the speed increment and the second motion speed may be superimposed to obtain the updated second target speed.

In addition, a third target distance between the second virtual object and the first virtual object may also be determined, and the second motion speed may be adjusted based on the third target distance; or the second motion information may also be redetermined based on the location information of the following anchor point and the first motion information, and the second virtual object is controlled to move based on the redetermined second motion information.

In practice, because the location of the following anchor point is often in front of the sight of the first virtual object, the second virtual object will often moves from the rear of the first virtual object to gradually enter the perspective of the first virtual object when the second virtual object moves following the following anchor point.

In an optional example, when detecting that the second virtual object is in a target region corresponding to the first virtual object, a preset media resource corresponding to the second virtual object may be displayed.

Here, the target region may be a preset region located within a viewing angle range of the first virtual object, such as the front left or front right, etc. The preset media resource may be a video resource in which the second virtual object interacts with the first virtual object, and the content of the video resource may be, for example, the second virtual object looking back at the first virtual object.

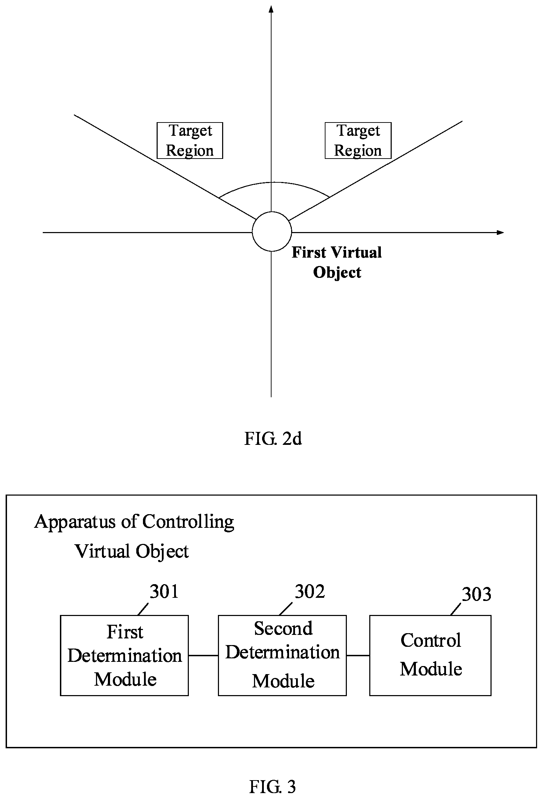

Exemplarily, the schematic diagram of the target region may be shown in FIG. 2d. In FIG. 2d, the target region is located within the viewing angle range of the first virtual object. When detecting that the second virtual object is in the target region corresponding to the first virtual object, the video resource of the second virtual object looking back at the first virtual object may be displayed.

In practice, the first virtual object may engage in combat in the target game, and the second virtual object may also participate in the combat of the first virtual object.

In an optional example, a combat target corresponding to the second virtual object is determined in response to the first virtual object being in the target combat state; and the second virtual object is controlled to perform a target combat action on the combat target based on location information corresponding to the combat target.

Here, the target combat state includes the first virtual object launching an attack, the first virtual object being attacked, etc.; the combat target may be a virtual object that the first virtual object targets when launching an attack, or may be a virtual object that launches an attack on the first virtual object; and the target combat action may be a combat action corresponding to the type of the second virtual object, such as breathing fire.

Specifically, when controlling the second virtual object to perform the target combat action on the combat target based on the location information corresponding to the combat target, the combat location information of the second virtual object may be determined based on the location information corresponding to the combat target and the combat distance corresponding to the second virtual object, and the second virtual object may be controlled to perform the target combat action on the combat target at the location corresponding to the combat location information.

The present disclosure provides a method of controlling a virtual object, which can determine the location information of the following anchor point of the second virtual object associated with the first virtual object based on the pose information of the first virtual object, and control the second virtual object to move based on the location information of the following anchor point. In this way, because the second virtual object does not directly follow the first virtual object to move, there are more display opportunities from the perspective of the first virtual object; on the other hand, using the pose information of the first virtual object to determine the location information of the following anchor point can increase the display opportunities for the second virtual object to appear in the perspective of the first virtual object, thereby improving user experience.

Those skilled in the art may understand that in the above-mentioned methods of specific embodiments, the writing order of respective steps does not mean a strict execution order and does not constitute any limitation on the implementation process. The specific execution order of respective steps should be determined based on its function and possible internal logic.

Based on the same inventive concept, the embodiments of the present disclosure further provide an apparatus of controlling a virtual object corresponding to the method of controlling a virtual object. Because the problem-solving principle of the apparatus in the embodiments of the present disclosure is similar with the method of controlling a virtual object mentioned above in the embodiments of the present disclosure, the implementation of the apparatus can refer to the implementation of the method, and repeated details will not be repeated.

Referring to FIG. 3, which is a schematic diagram of an architecture of an apparatus of controlling a virtual object provided by the embodiments of the present disclosure, the apparatus includes a first determination module 301, a second determination module 302, and a control module 303;

The first determination module 301 is configured to determine pose information of a first virtual object in response to the first virtual object being in a target motion state.

The second determination module 302 is configured to determine location information of a following anchor point based on the pose information, in which the following anchor point is used to represent a motion end of a second virtual object associated with the first virtual object under the pose information.

The control module 303 is configured to control the second virtual object to move based on the location information of the following anchor point.

In an optional example, the first determination module 301, when determining pose information of a first virtual object, is configured to:
determine the pose information of the first virtual object in a game map.

In an optional example, the second determination module 302, when determining location information of a following anchor point based on the pose information, is configured to:
determine a following distance corresponding to the first virtual object and/or the second virtual object;
determine a following angle based on the pose information;
and determine the location information of the following anchor point based on location information in the pose information, the following distance, and the following angle.

In an optional example, the second determination module 302, when determining a following distance corresponding to the first virtual object and/or the second virtual object, is configured to:
determine a following distance corresponding to a type of the first virtual object and/or a type of the second virtual object;
or determining a following distance corresponding to a type of the first virtual object and/or a type of the second virtual object, and a game scene where the first virtual object is located.

In an optional example, the second determination module 302, when determining location information of a following anchor point based on the pose information, is configured to:
determine first motion information corresponding to the first virtual object;
and determine the location information of the following anchor point based on the first motion information and the pose information.

In an optional example, before controlling the second virtual object to move, the first determination module 301 is further configured to:
determine a target duration of the first virtual object being in the target motion state;
and the control module 303, when controlling the second virtual object to move based on the location information of the following anchor point, is configured to:
controlling the second virtual object to move based on the location information of the following anchor point when the target duration is detected to satisfy a preset condition.

In an optional example, the control module 303, when controlling the second virtual object to move based on the location information of the following anchor point, is configured to:
determine first motion information corresponding to the first virtual object;
determine second motion information corresponding to the second virtual object based on the location information of the following anchor point and the first motion information, and control the second virtual object to move based on the second motion information.

In an optional example, the control module 303 is further configured to:
determine location change information of the following anchor point;
update the second motion information based on the location change information, and control the second virtual object to move based on updated second motion information.

In an optional example, the control module 303 is further configured to:
displaying a preset media resource corresponding to the second virtual object, in a case where the second virtual object is detected being in a target region corresponding to the first virtual object.

In an optional example, the control module 303 is further configured to:
determine a combat target corresponding to the second virtual object in response to the first virtual object being in the target combat state;
and control the second virtual object to perform a target combat action on the combat target based on location information corresponding to the combat target.

The apparatus of controlling a virtual object provided by the embodiments of the present disclosure can determine the location information of the following anchor point of the second virtual object associated with the first virtual object based on the pose information of the first virtual object, and control the second virtual object to move based on the location information of the following anchor point. In this way, because the second virtual object does not directly follow the first virtual object to move, there are more display opportunities from the perspective of the first virtual object; on the other hand, using the pose information of the first virtual object to determine the location information of the following anchor point can increase the display opportunities for the second virtual object to appear in the perspective of the first virtual object, thereby improving user experience.

For a description of the processing flow of respective modules in the apparatus and the interaction flow between the modules, please refer to the relevant descriptions in the above method embodiments, and will not be described in detail here.

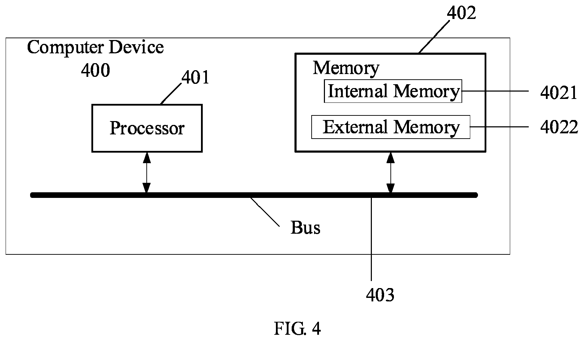

Based on the same technical concept, the embodiments of the present disclosure further provide a computer device. Referring to FIG. 4, which is a schematic structural diagram of a computer device 400 provided by the embodiments of the present disclosure, the computer device 400 includes a processor 401, a memory 402, and a bus 403. The memory 402 is used to store execution instructions, including a memory 4021 and an external memory 4022; the memory 4021 here is also called an internal memory, and is used to temporarily store the operation data in the processor 401, and the data exchanged with the external memory 4022 such as a hard disk, the processor 401 exchanges data with the external memory 4022 through the memory 4021. When the computer device 400 is running, the processor 401 and the memory 402 communicate through the bus 403, so that the processor 401 executes the following instructions:
determining pose information of a first virtual object in response to the first virtual object being in a target motion state;
determining location information of a following anchor point based on the pose information, wherein the following anchor point is used to represent a motion end of a second virtual object associated with the first virtual object under the pose information;
and controlling the second virtual object to move based on the location information of the following anchor point.

In an optional example, in the instructions of the processor 401, determining pose information of a first virtual object includes:
determining the pose information of the first virtual object in a game map.

In an optional example, in the instructions of the processor 401, determining location information of a following anchor point based on the pose information includes:
determining a following distance corresponding to the first virtual object and/or the second virtual object;
determining a following angle based on the pose information;
and determining the location information of the following anchor point based on location information in the pose information, the following distance, and the following angle.

In an optional example, in the instructions of the processor 401, determining a following distance corresponding to the first virtual object and/or the second virtual object includes:
determining a following distance corresponding to a type of the first virtual object and/or a type of the second virtual object;
or determining a following distance corresponding to a type of the first virtual object and/or a type of the second virtual object, and a game scene where the first virtual object is located.

In an optional example, in the instructions of the processor 401, determining location information of a following anchor point based on the pose information includes:
determining first motion information corresponding to the first virtual object;
and determining the location information of the following anchor point based on the first motion information and the pose information.

In an optional example, the instructions of the processor 401, before controlling the second virtual object to move, further include:
determining a target duration of the first virtual object being in the target motion state;
controlling the second virtual object to move based on the location information of the following anchor point includes:
   controlling the second virtual object to move based on the location information of the following anchor point when the target duration is detected to satisfy a preset condition.

In an optional example, in the instructions of the processor 401, controlling the second virtual object to move based on the location information of the following anchor point includes:
determining first motion information corresponding to the first virtual object;
and determining second motion information corresponding to the second virtual object based on the location information of the following anchor point and the first motion information, and controlling the second virtual object to move based on the second motion information.

In an optional example, the instructions of the processor 401 further include:
determining location change information of the following anchor point;
and updating the second motion information based on the location change information, and controlling the second virtual object to move based on updated second motion information.

In an optional example, the instructions of the processor 401 further include:
displaying a preset media resource corresponding to the second virtual object, in a case where the second virtual object is detected being in a target region corresponding to the first virtual object.

In an optional example, the instructions of the processor 401 further include:
determining a combat target corresponding to the second virtual object in response to the first virtual object being in the target combat state;
and controlling the second virtual object to perform a target combat action on the combat target based on location information corresponding to the combat target.

The embodiments of the present disclosure further provide a computer-readable storage medium. A computer program is stored on the computer-readable storage medium, and the computer program, when executed by a processor, executes the steps of the method of controlling a virtual object described in the above method embodiments. The storage medium may be a volatile or non-volatile computer-readable storage medium.

The embodiments of the present disclosure further provide a computer program product, and the computer program product carries program code. Instructions included in the program code can be used to execute the steps of the method of controlling a virtual object described in the above method embodiments, details may refer to the above method embodiments, which will not be described in detail here.

The above-mentioned computer program product may be specifically implemented by hardware, software or a combination thereof. In an optional embodiment, the computer program product is embodied as a computer storage medium. In another optional embodiment, the computer program product is embodied as a software product, such as a Software Development Kit (SDK), etc.

Those skilled in the art can clearly understand that for the convenience and simplicity of description, the specific working processes of the systems and devices described above may be referred to the corresponding processes in the foregoing method embodiments, and will not be described in detail here. In the embodiments provided by the present disclosure, it should be understood that the disclosed systems, devices and methods can be implemented in other ways. The device embodiments described above are only illustrative. For example, the division of the units is only a logical function division. In actual implementation, there may be other division methods. For example, multiple units or components may be combined or may be integrated into another system, or some features may be ignored, or not executed. On the other hand, the coupling or direct coupling or communication connection between each other shown or discussed may be through some communication interfaces, and the indirect coupling or communication connection of the devices or units may be in electrical, mechanical or other forms.

The units described as separate components may or may not be physically separated, and the components shown as units may or may not be physical units, that is, they may be located in one place, or they may be distributed to multiple network units. Some or all of the units may be selected according to actual needs to achieve the purpose of the solution of this embodiment.

In addition, each functional unit in various embodiments of the present disclosure may be integrated into one processing unit, or each unit may exist physically alone, or two or more units may be integrated into one unit.

If the functions are implemented in the form of software functional units and sold or used as independent products, they can be stored in a non-volatile computer-readable storage medium that is executable by a processor. Based on this understanding, the technical solution of the present disclosure essentially or the part that contributes to the existing technology or the part of the technical solution can be embodied in the form of a software product. The computer software product is stored in a storage medium, including several instructions that are used to cause a computer device (which may be a personal computer, a server, or a network device, etc.) to execute all or part of the steps of the methods described in various embodiments of the present disclosure. The above-mentioned storage medium includes a U disk, a mobile hard disk, a read-only memory (ROM), a random access memory (RAM), a magnetic disk or an optical disk and other medium that can store program code.

Finally, it should be noted that the above-mentioned embodiments are only specific implementations of the present disclosure and are used to illustrate the technical solutions of the present disclosure rather than to limit them. The protection scope of the present disclosure is not limited thereto. Although the present disclosure is described in detail refer to the foregoing embodiments, those of ordinary skill in the art should understand that any person familiar with the technical field can still modify the technical solutions recorded in the foregoing embodiments within the technical scope disclosed in the present disclosure. Changes may be easily imagined, or equivalent substitutions may be made to some of the technical features; and these modifications, changes or substitutions do not cause the essence of the corresponding technical solutions to deviate from the spirit and scope of the technical solutions of the embodiments of the present disclosure, and shall be within the protection scope of the present disclosure. Therefore, the protection scope of the present disclosure should be determined by the protection scope of the claims.

## Claims

1. A method of controlling a virtual object, comprising:
determining pose information of a first virtual object in response to the first virtual object being in a target motion state;
determining location information of a following anchor point based on the pose information, wherein the following anchor point is used to represent a motion end of a second virtual object associated with the first virtual object under the pose information; and
controlling the second virtual object to move based on the location information of the following anchor point.

2. The method according to claim 1, wherein determining pose information of a first virtual object comprises:
determining the pose information of the first virtual object in a game map.

3. The method according to claim 1 or 2, wherein determining location information of a following anchor point based on the pose information comprises:
determining a following distance corresponding to the first virtual object and/or the second virtual object;
determining a following angle based on the pose information; and
determining the location information of the following anchor point based on location information in the pose information, the following distance, and the following angle.

4. The method according to claim 3, wherein determining a following distance corresponding to the first virtual object and/or the second virtual object comprises:
determining a following distance corresponding to a type of the first virtual object and/or a type of the second virtual object; or
determining a following distance corresponding to a type of the first virtual object and/or a type of the second virtual object, and a game scene where the first virtual object is located.

5. The method according to any one of claims 1-4, wherein determining location information of a following anchor point based on the pose information comprises:
determining first motion information corresponding to the first virtual object; and
determining the location information of the following anchor point based on the first motion information and the pose information.

6. The method according to any one of claims 1-5, wherein before controlling the second virtual object to move, the method further comprises:
determining a target duration of the first virtual object being in the target motion state; and
controlling the second virtual object to move based on the location information of the following anchor point comprises:
controlling the second virtual object to move based on the location information of the following anchor point when the target duration is detected to satisfy a preset condition.

7. The method according to claim 6, wherein controlling the second virtual object to move based on the location information of the following anchor point comprises:
determining first motion information corresponding to the first virtual object; and
determining second motion information corresponding to the second virtual object based on the location information of the following anchor point and the first motion information, and controlling the second virtual object to move based on the second motion information.

8. The method according to claim 7, further comprising:
determining location change information of the following anchor point; and
updating the second motion information based on the location change information, and controlling the second virtual object to move based on updated second motion information.

9. The method according to any one of claims 1-8, further comprising:
displaying a preset media resource corresponding to the second virtual object, in a case where the second virtual object is detected being in a target region corresponding to the first virtual object.

10. The method according to any one of claims 1-9, further comprising:
determining a combat target corresponding to the second virtual object in response to the first virtual object being in the target combat state; and
controlling the second virtual object to perform a target combat action on the combat target based on location information corresponding to the combat target.

11. An apparatus of controlling a virtual object, comprising:
a first determination module, configured to determine pose information of a first virtual object in response to the first virtual object being in a target motion state;
a second determination module, configured to determine location information of a following anchor point based on the pose information, wherein the following anchor point is used to represent a motion end of a second virtual object associated with the first virtual object under the pose information; and
a control module, configured to control the second virtual object to move based on the location information of the following anchor point.

12. A computer device, comprising a processor, a memory, and a bus,
wherein the memory stores machine-readable instructions executable by the processor, when the computer device is running, the processor and the memory communicate through the bus, and the machine-readable instructions, when executed by the processor, execute steps of the method of controlling a virtual object according to any one of claims 1 to 10.

13. A computer-readable storage medium, wherein a computer program is stored in the computer-readable storage medium, and the computer program, when executed by a processor, executes steps of the method of controlling a virtual object according to any one of claims 1 to 10.

14. A computer program product, comprising a computer program, wherein the computer program, when executed by a processor, implements steps of the method of controlling a virtual object according to any one of claims 1-10.
